# EUROPÄISCHE PATENTANMELDUNG

(11) **EP 0 856 675 A1**
(43) Veröffentlichungstag der Anmeldung: **05.08.1998**
(21) Anmeldenummer: 98101246.1
(22) Anmeldetag: 24.01.1998
(51) Int. Cl.: F16D 9/08

(54) **Antrieb mit einer Drehmomentbegrenzung zwischen einer Welle und einer Nabe**

(30) Priorität: 31.01.1997 DE 19703533
(71) Anmelder: ZF FRIEDRICHSHAFEN Aktiengesellschaft, 88038 Friedrichshafen (DE)
(72) Erfinder: Foth, Joachim, Dr., 88238 Wangen (DE); Füssel, Uwe, Prof. Dr.-Ing., 09114 Chemnitz (DE); Bär, Carsten, Dr.-Ing., 85051 Ingolstadt (DE); Hörburger, Rudolf, 88046 Friedrichshafen (DE)

(57) **Zusammenfassung**

Die Erfindung betrifft einen Antrieb mit einer drehfesten Verbindung einer Welle (1) mit einer Nabe (17), wobei die Verbindung das Drehmoment des Antriebs begrenzt. Überlastsicherungen, die mit einer Sollbruchstelle arbeiten, haben den Nachteil, daß im Falle eines Bruchs die gebrochenen Teile ausgetauscht werden müssen. Dadurch entstehen Stillstandzeiten und erhebliche Folgekosten. Nach der Erfindung wird zur Sicherung des Antriebsstrangs gegen Überlast eine Lötpreßverbindung zwischen einer Welle (1) und einer Nabe (17) mit zylindrischen Fügeflächen (31) verwendet, von denen mindestens eine mit einem Lot beschichtet ist und die mit Übermaß zusammengefügt sind. Bei Überlast bricht die Verbindung auf, wodurch die Drehmomentspitze abgebaut wird. Nach Abklingen der Drehmomentspitze stellt sich die Verbindung selbsttätig wieder her.

## Beschreibung

Die Erfindung betrifft einen Antrieb mit einer drehfesten Verbindung einer Welle mit einer Nabe, wobei die Verbindung das Drehmoment des Antriebs begrenzt.

Bei Antrieben treten häufig unvorhergesehene Drehmomentspitzen auf, für die entweder der Antrieb ausgelegt werden muß oder die zur Zerstörung des Antriebs führen. Legt man den Antrieb für die hohen Drehmomentspitzen aus, ist der Antrieb im übrigen stark überdimensioniert, wodurch sich die Kosten, der Bauaufwand, das Gewicht, der Bauraum usw. unverhältnismäßig erhöhen.

Nimmt man die Zerstörung des Antriebs durch Drehmomentspitzen in Kauf, können die Kosten erheblich sein, die durch den Ausfall des Antriebs entstehen, insbesondere wenn andere Arbeitsgeräte und Einrichtungen beschädigt oder sogar Personen verletzt werden. Ferner können die Stillstandszeiten während der Reparatur und Montage von Ersatzteilen je nach Größe und Wert der Anlage erhebliche Folgekosten verursachen.

Es ist daher in der Antriebstechnik bekannt, Antriebe durch Überlastkupplungen oder Sollbruchstellen gegen Überlast zu sichern. Überlastkupplungen sind in der Regel sehr aufwendig, während Sollbruchstellen die Stillstandszeiten und die Gefährdungen zwar verringern, aber nicht ausschließen. Es sind verschiedene Arten von Sollbruchstellen bekannt, z. B. werden polygone Mitnahmeprofile verwendet, die bei Überlast in sich zusammenbrechen. Solche Sollbruchstellen schützen in der Regel nur gegen einen Gewaltbruch, nicht jedoch gegen Schwingungsbrüche.

Der Erfindung liegt die Aufgabe zugrunde, einen Antrieb gegen Überlast zu sichern, ohne die zuvor oben beschriebenen Nachteile zu erhalten. Sie wird gemäß der Erfindung durch die Merkmale des Anspruchs 1 gelöst.

Die Welle und die Nabe besitzen zylindrische Fügeflächen, die mit Übermaß zusammengefügt sind, wobei durch die Größe des Übermaßes und der Fügeflächen das übertragbare Drehmoment bestimmt wird. Übersteigt das Spitzendrehmoment das übertragbare Drehmoment, reißt die Verbindung auf und die Nabe rutscht auf der Welle um einen Winkelbetrag, wobei sich die Überlast abbaut. Im Normalfall würden die Fügeflächen bei einem üblichen Preßsitz in Kürze zerstört und das übertragbare Drehmoment würde sich unkontrolliert verändern. Gemäß der Erfindung wird mindestens eine der Fügeflächen mit Lot beschichtet. Dadurch können die Fügeflächen unter Überlast aufeinander gleiten und werden selbst nach häufiger Überlastung nicht zerstört. Dadurch ist die Verbindung nach der Überlastung wieder voll funktionsfähig. Es entstehen durch die Überlastung kein Ausfall des Antriebs und keine damit verbundenen Stillstandskosten, Reparaturkosten und Folgeschäden. Solche Folgeschäden könnten auch darin bestehen, daß z. B. bei einem Bruch eines Antriebsgehäuses austretendes Schmieröl die Umwelt belastet.

Als Lote für die Beschichtung eignen sich grundsätzlich alle bekannten Lote, jedoch haben sich Kupfer, Zink oder eine Legierung mit Kupfer oder Zink besonders bewährt. Die Auswahl des Lots ergibt einen weiteren Parameter, um das übertragbare Drehmoment zu modifizieren und die Verbindung der Nabe mit der Welle auf die Einsatzfälle anzupassen. Hierbei ist es möglich, nur eine Fügefläche mit einem Lot oder beide Fügeflächen mit dem gleichen Lot oder mit unterschiedlichen Loten zu beschichten. Besonders gute Ergebnisse haben sich ergeben, wenn die Schichtdicke des Lots 1 - 14 µ beträgt. Ferner sollte das Übermaß zwischen der Welle und der Nabe im Bereich der Fügeflächen zwischen 5 und 32 µm liegen.

Die Erfindung ist allgemein anwendbar, insbesondere bei Schaltgetrieben mit oder ohne Nebenabtriebe, stufenlose Getriebe mit Umschlingungsorganen, um den Verschleiß zu reduzieren, usw. Weitere Einzelheiten und Vorteile ergeben sich aus der folgenden Figurenbeschreibung.

In der Beschreibung und in den Ansprüchen sind zahlreiche Merkmale im Zusammenhang dargestellt und beschrieben. Der Fachmann wird die kombinierten Merkmale zweckmäßigerweise im Sinne der zu lösenden Aufgaben auch einzeln betrachten und zu sinnvollen weiteren Kombinationen zusammenfassen.

In der Zeichnung ist ein Ausführungsbeispiel der Erfindung dargestellt. Es zeigt:

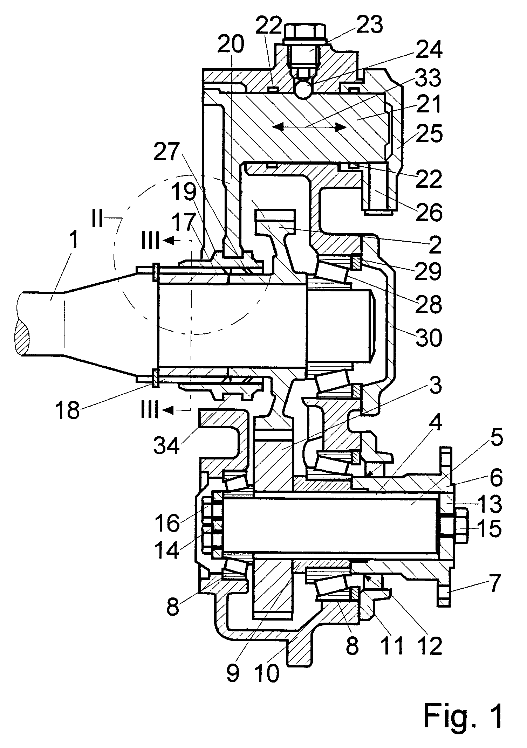

- Fig. 1: einen Längsschnitt durch einen Nebenabtrieb eines Fahrzeuggetriebes,
- Fig. 2: eine Einzelheit entsprechend II in Fig. 1 und
- Fig. 3: einen Querschnitt entsprechend der Linie III - III in Fig. 1.

In der Regel braucht man für Nebenabtriebe nur einen Bruchteil der Leistung des Hauptantriebs eines Fahrzeugs. Da sie aber über die Anfahrkupplung des Fahrzeugs mit einem Motor verbunden werden, besteht die Gefahr, daß sie überlastet werden, wobei sowohl Zahnräder 2 und 3 als auch ein Gehäuse 10 brechen können (Fig. 13).

Mit 1 ist eine Antriebswelle des Nebenabtriebs bezeichnet, die mit einem nicht näher dargestellten Motor des Fahrzeugs über eine Kupplung verbunden ist. Die Antriebswelle 1 ist mittels eines Kegelrollenlagers 28 in dem Gehäuse 10 gelagert. Ein äußerer Lagerring des Kegelrollenlagers 28 stützt sich über eine Scheibe 29 an einem Lagerdeckel 30 ab.

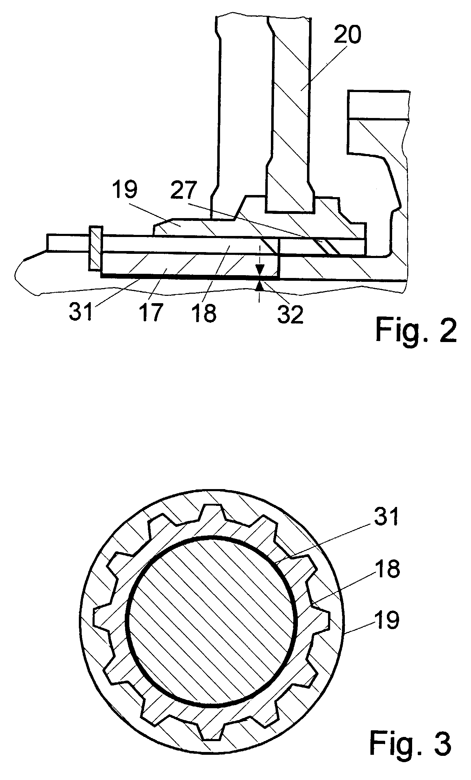

Auf der Antriebswelle 1 ist das Zahnrad 2 drehbar gelagert, das über eine Schiebemuffe 19 formschlüssig mit der Antriebswelle 1 verbunden werden kann. Zu diesem Zweck weist das Zahnrad 2 und die Schiebemuffe 19 eine Schaltverzahnung 27 auf. In axialer Verlängerung der Schaltverzahnung 27 ist die Schiebemuffe 19 über ein Mitnahmeprofil 18 drehfest mit einer Buchse 17 verbunden, die auf der Antriebswelle 1 aufgepreßt ist. Eine Fügefläche zwischen der Antriebswelle 1 und der Buchse 17 ist mit 31 bezeichnet (Fig. 2). Die Antriebswelle 1 und die Buchse 17 besitzen im Bereich der Fügefläche 31 ein Übermaß, so daß eine Preßpassung erzielt wird. Das Übermaß beträgt zweckmäßigerweise 5 bis 32 µm.

Die Antriebswelle 1 und/oder die Buchse 17 sind im Bereich der Fügefläche 31 mit einem Lot beschichtet, dessen Schichtdicke 32 zwischen 1 - 14 µm liegt.

Als Lot eignen sich Kupfer, Zink oder eine Legierung mit diesen Metallen. Es können aber auch andere Lote je nach Anwendungsfall verwendet werden. Durch die Auswahl des Lots, die Bemessung der Fügefläche 17 im Durchmesser und in der axialen Länge kann das übertragbare Drehmoment an den Einsatzfall angepaßt werden.

Die Schiebemuffe 19 ist in ausgerückter Stellung gezeichnet. Sie kann hydraulisch oder pneumatisch mittels eines Stellers 20 verstellt werden, der in eine Umfangsnut 34 der Schiebemuffe 19 eingreift und mit einem im Gehäuse 10 geführten Kolben 21 verbunden ist (Fig. 13). Dieser wird über einen Druckanschluß 26 stirnseitig mit Druckmittel beaufschlagt und bewegt sich in Richtung eines Pfeiles 33. Dichtungen 22 dichten den Kolben 21 gegenüber dem Gehäuse 10 und dem Deckel 25 ab. Eine Raste 23 mit einer Kugel 24 zentriert den Kolben 21 in der ausgerückten Lage, bis der Betätigungsdruck die Rastkräfte überwindet.

Das Zahnrad 2 kämmt mit dem weiteren Zahnrad 3, das über eine Mitnahmeverzahnung 4 mit einer Abtriebswelle 5 drehfest verbunden ist. Kegelrollenlager 8 stützen die Abtriebswelle 5 im Gehäuse 10 ab, wobei das Gehäuse 10 nach außen durch eine Dichtung 12 in einem Gehäusedeckel 11 abgedichtet ist.

Die Mitnahmeverzahnung 4 verbindet ferner einen Abtriebsflansch 6 drehfest mit der Abtriebswelle 5. Über Scheiben 13 und 14 und zugehörigen Schrauben 15 und 16 wird über die Abtriebswelle 5 der Kraftfluß über den Flansch 6 einer Lagerbuchse 9 dem Zahnrad 3 und den inneren Lagerringen der Kegelrollenlager 8 geschlossen.

Übersteigt das Drehmoment an der Antriebswelle 1 das übertragbare Drehmoment der Lötpreßverbindung im Bereich der Fügefläche 31, löst sich die Verbindung kurzfristig und die Schiebemuffe 19 gleitet auf der Antriebswelle 1 um einen entsprechenden Winkelbetrag. Klingt die Drehmomentspitze wieder ab, verfestigt sich der Sitz im Bereich der Fügefläche 31 und die Lötpreßverbindung ist wieder voll funktionsfähig. Dadurch sind sowohl die Antriebselemente, die Zahnräder 2 und 3, als auch das Gehäuse 10 gegen Beschädigung geschützt. Da auch keine Schäden an der Buchse 17 und an der Antriebswelle 1 auftreten, bleibt der Antrieb voll funktionsfähig und Stillstandzeiten, wie sie sonst üblicherweise bei Sollbruchstellen für das Auswechseln der gebrochenen Teile notwendig sind, entfallen.

Schließlich beansprucht die Buchse 17 keinen zusätzlichen Bauraum und sie kann leicht konstruktiv und werkstofftechnisch auf den jeweiligen Einsatzfall abgestimmt werden. Sie kann ferner werkstoffmäßig auf das Mitnahmeprofil 18 abgestimmt und ausgetauscht werden, wenn das Mitnahmeprofil 18 verschlissen ist.

### Bezugszeichen

- 1: Antriebswelle
- 2: Zahnrad
- 3: Abtriebszahnrad
- 4: Mitnahmeverzahnung
- 5: Abtriebswelle
- 6: Abtriebsflansch
- 7: Schraubenlöcher
- 8: Kegelrollenlager
- 9: Lagerbüchse
- 10: Gehäuse
- 11: Gehäusedeckel
- 12: Dichtung
- 13: Scheibe
- 14: Scheibe
- 15: Schraube
- 16: Schraube
- 17: Buchse
- 18: Mitnahmeprofil
- 19: Schiebemuffe
- 20: Steller
- 21: Kolben
- 22: Dichtung
- 23: Raste
- 24: Kugel
- 25: Deckel
- 26: Druckanschluß
- 27: Schaltverzahnung
- 28: Lager
- 29: Anlaufscheibe
- 30: Lagerdeckel
- 31: Fügefläche
- 32: Schichtdicke
- 33: Pfeil
- 34: Umfangsnut

## Patentansprüche

1. Antrieb mit einer drehfesten Verbindung einer Welle (1) mit einer Nabe (17), wobei die Verbindung das Drehmoment des Antriebs begrenzt, dadurch **gekennzeichnet,** daß die Welle (1) und die Nabe (17) zylindrische Fügeflächen (31) besitzen, von denen mindestens eine mit einem Lot beschichtet ist und die mit Übermaß zusammengefügt sind.

2. Antrieb nach Anspruch 1, dadurch **gekennzeichnet,** daß als Lot Kupfer oder Zink oder eine Legierung mit Kupfer oder Zink verwendet werden.

3. Antrieb nach einem der vorhergehenden Ansprüche, dadurch **gekennzeichnet,** daß die Fügeflächen (31) mit unterschiedlichen Loten beschichtet sind.

4. Antrieb nach einem der vorhergehenden Ansprüche, dadurch **gekennzeichnet,** daß die Schichtdicke (32) des Lots 1 bis 14 µm beträgt.

5. Antrieb nach einem der vorhergehenden Ansprüche, dadurch **gekennzeichnet,** daß das Übermaß 5 bis 32 µm beträgt.

6. Antrieb nach einem der vorhergehenden Ansprüche, dadurch **gekennzeichnet,** daß die Nabe (17) aus einer Buchse (17) besteht, die an einer freien Stirn- oder Umfangsfläche ein Mitnahmeprofil (18) hat.

7. Antrieb nach einem der vorhergehenden Ansprüche, dadurch **gekennzeichnet,** daß die Verbindung zwischen einem Antriebselement und einer Welle (1) eines Getriebes angeordnet ist.

8. Antrieb nach Anspruch 7, dadurch **gekennzeichnet,** daß das Antriebselement ein Zahnrad (2) ist, das über eine Schiebemuffe (19) mit der Welle (1) formschlüssig kuppelbar ist, und die Buchse (17) zwischen der Schiebemuffe (19) und der Welle (1) angeordnet ist.

9. Antrieb nach einem der vorhergehenden Ansprüche, dadurch **gekennzeichnet,** daß das übertragbare Drehmoment der Verbindung eingestellt wird, indem der Durchmesser und/oder die axiale Länge der Fügeflächen (31) verändert werden.
